# EUROPEAN PATENT SPECIFICATION

(11) **EP 2 912 331 B1**
(45) Date of publication and mention of the grant of the patent: **19.10.2016**
(21) Application number: 14777885.6
(22) Date of filing: 07.08.2014
(51) Int. Cl.: F16D 65/092, F16D 69/04

(54) **PLATE FOR SUPPORTING FRICTION MATERIAL BUTTONS FOR DISC BRAKES OF RAILWAY WHEELED VEHICLES AND FRICTION PAD COMPRISING SAID PLATE**
TRÄGERPLATTE FÜR REIBUNGSMATERIALKNÖPFE FÜR SCHEIBENBREMSEN FÜR BERÄDERTE SCHIENENFAHRZEUGE UND REIBUNGSKLOTZ MIT DER BESAGTEN PLATTE
PLAQUE PORTEUSE DE PASTILLES DE MATÉRIAU DE FRICTION POUR FREINS À DISQUES DE VÉHICULES FERROVIAIRES SUR ROUES ET PATIN DE FROTTEMENT COMPORTANT LADITE PLAQUE

(30) Priority: 07.08.2013 IT RM20130463
(43) Date of publication of application: 02.09.2015
(73) Proprietor: Im-iniziative Meccaniche S.r.l., 80125 Napoli (NA) (IT)
(72) Inventor: RUSSO, Sergio, I-80125 Napoli (NA) (IT); RUSSO Corrado, I-80125 Napoli (NA) (IT)
(74) Representative: Iannone, Carlo Luigi
(86) International application number: PCT/IT2014/000210
(87) International publication number: WO 2015/019380

(56) References cited:
- EP-A1- 0 106 782
- EP-A1- 2 023 000
- EP-A2- 0 263 752
- US-A- 3 198 294

## Description

The present invention relates to a plate for supporting friction material buttons for disc brakes of railway wheeled vehicles.

In greater detail, the invention relates to the structure of a plate of said type which is configured so that, during the braking phase of a railway vehicle, it deforms elastically (i.e. in an elastic field) to allow distribution of contact pressures between the friction surface of each button it supports and the surface of the disc against which each button is pushed to be as uniform as possible and to allow the friction surface of each button to be maintained parallel to the disc surface and in contact with it.

The present invention also relates to a friction pad comprising said supporting plate.

The friction material buttons of the present invention are buttons of a friction pad for disc brakes of railway wheeled vehicles, of which the plate is also a part.

A supporting plate for friction material buttons is described in patent EP 0106782.

Said supporting plate is flexible and elastic and is fixed, along the perimeter, to a base plate, by means of riveting, between which spacers are interposed.

However, although flexible and elastic, said supporting plate has disadvantages.

A first disadvantage is the rigidity of the buttons with respect to the disc as the distance of the buttons from the attachment points between the supporting plate and the base plate varies. In detail, the buttons positioned in proximity to the attachment points have a higher rigidity than the buttons which are furthest from said attachment points. Since, in the balance of forces which is established during the braking phase, the normal force applied to the friction pad by means of the seal holder of the brake calliper is distributed on the individual buttons which form it in proportion to the respective rigidity, the buttons positioned in proximity to the attachment points are characterised by a greater contact pressure.

Consequently, the buttons positioned in proximity to the attachment points are characterised by a normal force and therefore by a friction force which are greater than the buttons which are furthest from the attachment points.

A second disadvantage is that, during the thermal transient which occurs during the braking phase, the deformations of the supporting plate negatively influence distribution of the contact pressures between the friction surface of each button and the disc surface. In fact, during the braking phase, the supporting plate, as a consequence of the heat transmitted through conduction from the buttons to it, heats up more than the base plate. Said difference in temperature between the two plates, which can reach 300°C, causes different thermal expansions. The presence, along the perimeter, of rigid constraints (i.e. riveting) between the two plates prevents linear cubic expansion, but, on the contrary, causes distortions of the supporting plate. Each button, rigidly constrained to the supporting plate, follows its deformations, with a consequent approach towards or movement away from the disc surface, so that the contact pressure and therefore also the normal force and the friction force vary.

Both said disadvantages occur simultaneously and are the cause of a lack of uniformity of distribution of the contact pressures of the various buttons of the friction pad and the resulting forces. This means that, during braking, each friction material button participates in the braking action in a different way, so that the buttons are worn differently and thermal distribution on the disc surface on which the friction pad is positioned is not uniform. In fact, particularly in the case of braking of High Speed railway vehicles (railway wheeled vehicles with speeds higher than 250 km/h), where the kinetic energy to be dissipated in friction is considerable, circumferential bands (so-called fire bands) of different colours may appear on the disc, at the most charged buttons (having greater contact pressures). Said circumferential bands are generated on the disc surface at said disc surface on which the most charged buttons slide during the braking phase, with a consequent localised increase in temperature which is generated by the friction of said buttons and the disc surface. The localised increase in temperature may lead to formation of so-called hot spots, which may cause cracks and lesions of the disc surface, compromising further use of said disc.

The object of the present invention is to overcome said disadvantages, providing a supporting plate to support the friction material buttons for disc brakes of railway wheeled vehicles, which is configured to be deformed in the elastic field in such a way that the distributions of contact pressures between the buttons and the disc surface are substantially uniform with each other, when a normal force is applied by means of the seal holder to a friction pad of which it forms part, in the presence or absence of a difference in temperature between said supporting plate and a base plate, coupled to said supporting plate. There is therefore a uniformity of normal and tangential forces exerted on said buttons, and a substantially uniform distribution of the temperature field on the disc surface.

Furthermore, advantageously, the configuration of the supporting plate is such that the buttons it supports have substantially the same normal rigidity to the disc surface and the friction surface of each button remains parallel to the disc surface and in contact with it, during the braking phase.

A further object of the present invention is to provide a friction pad comprising said supporting plate.

A specific object of the present invention is therefore a supporting plate for supporting a plurality of friction material buttons for disc brakes of railway wheeled vehicles, comprising:
- at least a first through hole to allow coupling of each button with said supporting plate, where each first through hole defines an area and the group of areas of each first through hole defines a centre of gravity on said supporting plate,
- at least one group of first eyelets or slots arranged around said at least first through hole, where each group of first eyelets comprises at least two first eyelets,
- a plurality of second through holes for the insertion of a respective blocking element so as to couple said supporting plate with a base plate, where said second through holes are arranged in proximity to the perimeter of said supporting plate.

Said first eyelets alternate with first portions of the supporting plate, so that, in the braking phase of a railway wheeled vehicle, in the presence or absence of a temperature difference between said supporting plate and said base plate, said first portions are deformed in the elastic field, due to the effect of normal forces applied on said buttons, in such a way that distributions of contact pressure on the buttons are substantially uniform with each other.

In detail, each group of first eyelets may be arranged around said at least first through hole.

In greater detail, each group of first eyelets may be arranged around at least two first through holes.

According to the invention, said supporting plate may comprise a third through hole for the insertion of a further blocking element, so as to further couple said supporting plate with said base plate. Said third through hole may be arranged at or in proximity to said centre of gravity.

Again according to the invention, said supporting plate may comprise at least one second eyelet or slot arranged in proximity to at least a second through hole, preferably a second eyelet for each second through hole.

In detail, each of said second eyelets may be curved and be arranged on said supporting plate at a second predetermined distance from a respective second through hole.

Advantageously, said supporting plate may comprise at least one anti-rotation element to prevent rotation of a respective button and block the orientation of said button on said supporting plate.

According to the invention, each group of first eyelets may comprise three first eyelets.

Said three first eyelets may be arranged at the vertices of a triangle, where each first eyelet is arranged on said supporting plate at a first predetermined distance from said first through holes.

In a first alternative, said supporting plate may comprise twelve first through holes, where six first through holes are arranged on a first central part of said supporting plate, three first through holes are arranged on a second side part of said supporting plate and three first through holes are arranged on a third side part of said supporting plate. Said supporting plate may comprise twelve groups of first eyelets, one for each first through hole, where six first groups of first eyelets are arranged on said first central part of said supporting plate, three second groups of first eyelets are arranged on said second side part of said supporting plate and three third groups of first eyelets are arranged on said third side part of said supporting plate.

Furthermore, the centres of said six first through holes provided on the first central part of said supporting plate may be arranged at the vertices of an irregular hexagon, where said irregular hexagon has as a centre said centre of gravity and is composed of six equal sides. The centres of said three first through holes provided on the second side part of said supporting plate may be arranged at the vertices of a first triangle and the centres of said three first through holes provided on the third side part of said supporting plate may be arranged at the vertices of a second triangle. The centre of each first through hole may coincide with the centre of gravity of a respective triangle formed of said three first eyelets of each group of first eyelets.

In a second alternative, said supporting plate may comprise nine first through holes, where three first through holes are arranged on a first central part of said supporting plate, three first through holes are arranged on a second side part of said supporting plate and three first through holes are arranged on a third side part of said supporting plate. Said supporting plate may comprise nine groups of first eyelets, one for each first through hole, where three first groups of first eyelets are arranged on said first central part of said supporting plate, three second groups of first eyelets are arranged on said second side part of said supporting plate and three third groups of first eyelets are arranged on said third side part of said supporting plate.

Furthermore, the centres of said three first through holes provided on said first central part of said supporting plate may be arranged at the vertices of a first triangle, the centres of said three first through holes provided on the second side part of said supporting plate may be arranged at the vertices of a second triangle and the centres of said three first through holes provided on the third side part of said supporting plate may be arranged at the vertices of a third triangle.

In a third alternative, said supporting plate may comprise six first through holes. Said supporting plate may comprise six groups of first eyelets, one for each first through hole, where the centres of three first through holes may be arranged at the vertices of a first triangle and the centres of three first through holes may be arranged at the vertices of a second triangle.

According to the invention, the first eyelets of each group of first eyelets may be arranged along a circumference.

In detail, each group of first eyelets may be arranged around three first through holes, where the centres of said three first through holes are arranged at the vertices of a triangle inscribed in a concentric circumference to the circumference along which said first eyelets are arranged.

It is preferable for said supporting plate to be made of steel, preferably AISI 422.

A specific object of the present invention is also a friction pad comprising the aforesaid supporting plate, and a plurality of friction material buttons, where each button comprises at least first coupling means to be coupled with at least a first through hole of said supporting plate. Each button is coupled on said supporting plate at a respective group of first eyelets.

According to the invention, in a first alternative, the supporting plate of said friction pad may comprise a spacer for each group of first eyelets, sized to occupy an area of said supporting plate defined by the first eyelets of each group of first eyelets and having a predetermined thickness and each button may comprise a portion of friction material, and a supporting element, where said supporting element comprises a first surface in contact with said portion of friction material, and also a second surface, opposite said first surface.

In a second alternative, each button may comprise a portion of friction material, and a supporting element, where said supporting element comprises a first surface in contact with said portion of friction material, and also a second surface and a third surface, parallel to and spaced from said second surface so as to form an elevation, so that, when a button is coupled with said supporting plate, said third surface comes into contact with said supporting plate and said second surface is at a third predetermined distance from said supporting plate.

In detail, said supporting plate may comprise a spacer for each group of first eyelets, sized to occupy an area of said supporting plate defined by said first eyelets of each group of first eyelets and having a predetermined thickness.

In greater detail, said third surface of said supporting element may have a substantially triangular shape or a circular shape or a convex polygonal shape.

According to the invention, each button may have a section of an irregular hexagon. Said irregular hexagon has three first sides, having a first length, alternating with three second sides, having a second length, where said second length is shorter than said first length.

Alternatively to the hexagonal section, each button may have a section of a triangle.

In conclusion, said friction pad may comprise a base plate, a dovetail element, where said base plate is coupled to said supporting plate by means of at least one spacer in such a way as to be at a predetermined distance from said supporting plate, and said dovetail element is fixed to said base plate.

The present invention will now be described, for illustrative and non-limiting purposes, according to its embodiments, with particular reference to the appended figures, wherein:
Figure 1 is a perspective view of a first embodiment of a subset of a friction pad comprising a supporting plate to support twelve friction material buttons for disc brakes and a base plate on which a dovetail element is fixed;
Figure 2 is a view from above of the subset of a friction pad of figure 1;
Figure 3 is a side view of the subset of a friction pad of figure 1;
Figure 4 is a view from above of a friction material button to be positioned on the supporting plate of figure 1;
Figure 5 is a sectional view of the friction material button of fig. 4 along line A-A;
Figure 6 is a perspective view of the friction material button of fig. 4;
Figure 7 is a view from above of a friction pad comprising the supporting plate on which a plurality of friction material buttons are arranged;
Figure 8 is a sectional view of the friction pad of fig. 7 along line C-C, where a detail shows a spacer interposed between the supporting plate and the base plate;
Figure 9 is a first perspective view of the friction pad comprising the supporting plate on which twelve friction material buttons are arranged;
Figure 10 is a second perspective view of the friction pad comprising the supporting plate from which several friction material buttons have been removed, several friction material buttons are shown in transparency and the area delimited by the first eyelets of a group of first eyelets is shown with a broken line to indicate that it is the contact surface between the supporting plate and a button, when the latter is mounted on said supporting plate;
Figures 11A-11E show the deformations in the elastic field of two adjacent supporting plates on a scale of 100: 1, each belonging to a respective friction pad, in different time instants;
Figure 12 is a perspective view of a second embodiment of a subset of a friction pad comprising a supporting plate to support nine friction material buttons for disc brakes;
Figure 13 is a view from above of the subset of a friction pad of figure 12;
Figure 14 is a perspective view of the friction pad comprising the supporting plate on which nine friction material buttons are arranged;
Figure 15 is a perspective view of a third embodiment of a subset of a friction pad comprising a supporting plate to support six friction material buttons for disc brakes;
Figure 16 is a view from above of the subset of a friction pad of figure 15;
Figure 17 is a perspective view of the friction pad comprising the supporting plate on which six friction material buttons are arranged;
Figure 18 is a perspective view of a fourth embodiment of a subset of a friction pad comprising a supporting plate to support six friction material buttons for disc brakes;
Figure 19 is a perspective view of a fifth embodiment of a subset of a friction pad comprising a supporting plate to support six friction material buttons for disc brakes, where each group of first eyelets is arranged around a plurality of first through holes;
Figure 20 is a view from above of the subset of a friction pad of figure 19;
Figure 21 is a view from above of a friction material button to be positioned on the supporting plate of figure 19;
Figure 22 is a sectional view of the friction material button of fig. 21 along line D-D;
Figure 23 is a perspective view of the friction material button of fig. 21.

With reference to the described embodiments, the term friction material refers to any sintered friction material. However, it is not necessary for the friction material to be a sintered friction material.

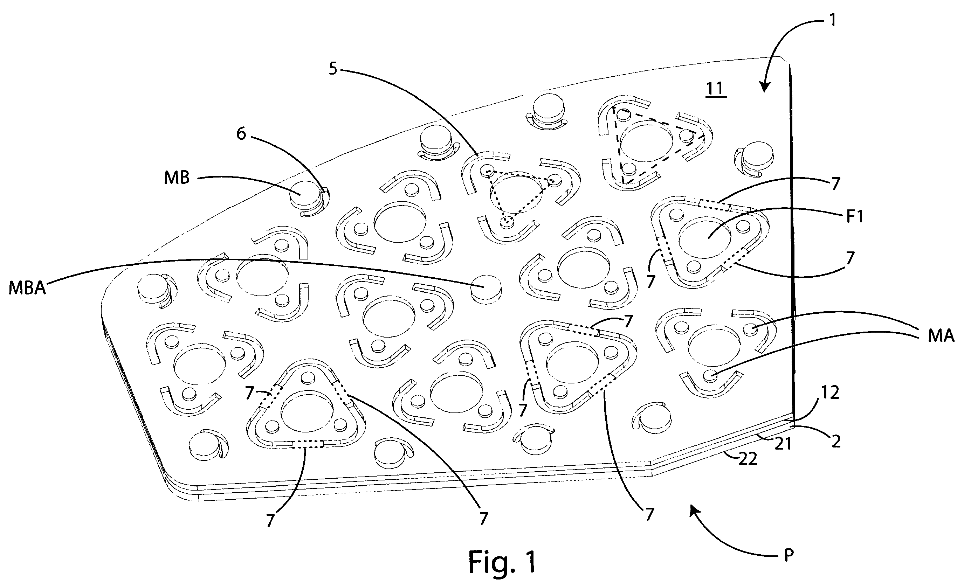

With reference to figures 1-10, a first embodiment of a supporting plate 1 of a friction pad P to support friction material buttons T for disc brakes of railway wheeled vehicles is described.

With particular reference to figures 1-3, said friction pad P comprises, in addition to said supporting plate 1 on which a plurality of buttons T are arranged, a base plate 2 and a dovetail element 3 to allow fixing of the friction pad P onto a seal holder (not shown). Two friction pads P mirrored with each other are mounted on a single seal holder.

The base plate 2 is coupled to said supporting plate 1 in such a way as to be at a predetermined distance D0 from said supporting plate 1, by means of interposition of spacers 23 (described below). The dovetail element is fixed to said base plate 2.

In other words, the base plate 2 is positioned between said supporting plate 1 and said dovetail element 3. In detail, the supporting plate 1 has a first face 11 turned towards said friction material buttons T and a second face 12 opposite said first face, turned towards said base plate 2. The base plate 2 has a first face 21 turned towards the second face 12 of the supporting plate 1, and a second face 22 opposite said first face 21, onto which said dovetail element 3 is fixed.

Furthermore, the supporting plate 1 comprises first through holes F1 to allow coupling of said supporting plate 1 with respective buttons T.

In detail, each first through hole F1 defines an area and the centre of gravity of the group of areas of said first through holes F1 arranged on said supporting plate is indicated with reference BA.

Furthermore, said centre of gravity BA coincides with the centre of gravity of the total area of friction. The total area of friction is the group of said friction surfaces of buttons T arranged on the supporting plate 1. As indicated below, each button T has a friction surface indicated with reference T1.

Therefore, reference BA shall indicate both the centre of gravity of the group of areas of the first through holes F1 and the centre of gravity of the total friction area of buttons T.

For each button T the supporting plate 1 comprises at least one anti-rotation element MA to prevent the button T from rotating and to block its orientation on the supporting plate 1. Said at least one anti-rotation element is arranged in proximity to said first through holes F1.

The supporting plate 1 further comprises a plurality of second through holes F2 and a third through hole F3 to allow coupling of said supporting plate 1 with the base plate 2. Each of said second through holes F2 is arranged in proximity to the perimeter of said supporting plate 1 and said third through hole F3 is arranged at said centre of gravity BA.

According to the invention, said supporting plate 1 comprises a plurality of first eyelets or slots 5 arranged in proximity to said first through holes F1 and a plurality of second eyelets or slots 6 arranged in proximity to said second through holes F2.

Said first eyelets 5 and said second eyelets 6 are obtained by removal of material from the supporting plate 1 (for example shearing).

In detail, the first eyelets 5 are arranged on the supporting plate 1 in a manner to form a plurality of groups of first eyelets. Around each first through hole F1 a respective group of first eyelets is provided. Each group of first eyelets comprises three first eyelets 5.

The first eyelets 5 of each group of first eyelets are curved and are arranged at the vertices of a triangle. Each first eyelet 5 has substantially the section of a parabola. The concavity of said parabola is turned towards said first through holes F1 and the vertex of said parabola is at a first predetermined distance D1 from the centre of a respective first through hole F1, in a manner that each anti-rotation element MA is interposed between a first through hole F1 and a respective first eyelet 5. Said first predetermined distance D1 may have a value between 14.5mm and 21.5mm, and is preferably 16.5mm.

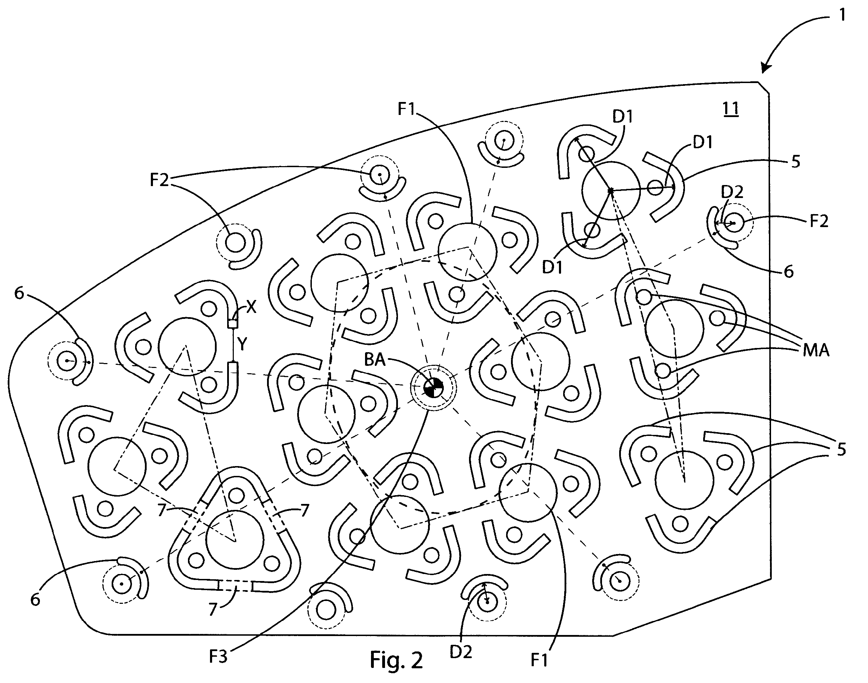

The first eyelets 5 of each group of first eyelets are distanced from each other by first portions 7 of the supporting plate. In other words, for each group of first eyelets, an alternation of first eyelets 5 and first portions 7 is provided, i.e. an alternation of empty portions (eyelets) and filled portions (portions of said supporting plate). Said first portions 7 have a width equal to width X of the eyelets and a predetermined length Y. In figure 2, each of said first portions 7 is defined by two broken lines, respectively joining the opposite edges of two consecutive first eyelets 5 of the same group, and by two continuous lines, which are the ends of said two consecutive first eyelets 5. The width X of said first eyelets 5 has a value between 1.5mm and 5mm, and is preferably 2.5mm. The length Y of said first portions 7 has a value between 3mm and 15mm, and is preferably 9mm.

In detail, the plate has a first central part, a second side part and a third side part. On each of said parts, a respective plurality of groups of first eyelets is provided.

In the first embodiment described, the supporting plate 1 is provided with twelve groups of first eyelets. Six groups of first eyelets are arranged on the central part of said supporting plate 1, three second groups of first eyelets are arranged on the second side part and three third groups of first eyelets are arranged on the third side part.

The centres of gravity of each triangle formed by the first eyelets 5 of the first groups of first eyelets are arranged at the vertices of an irregular hexagon, where each vertex coincides with the centre of a respective through hole F1. Said irregular hexagon has the centre of gravity BA as its centre and is formed of six equal sides, where a first pair of adjacent sides and a second pair of adjacent sides, opposite said first pair of sides, respectively define a first obtuse angle and a second obtuse angle, equal to each other and greater than each obtuse angle formed by each of the remaining sides with a side of each of said pairs of sides. In other words, the irregular hexagon is circumscribed by an ellipse and said centre of gravity BA is equidistant between two focal points of said ellipse.

The centres of gravity of each triangle formed by the first eyelets of the second groups and the third groups are arranged at the vertices of a respective isosceles triangle, where each vertex coincides with the centre of a respective through hole F1.

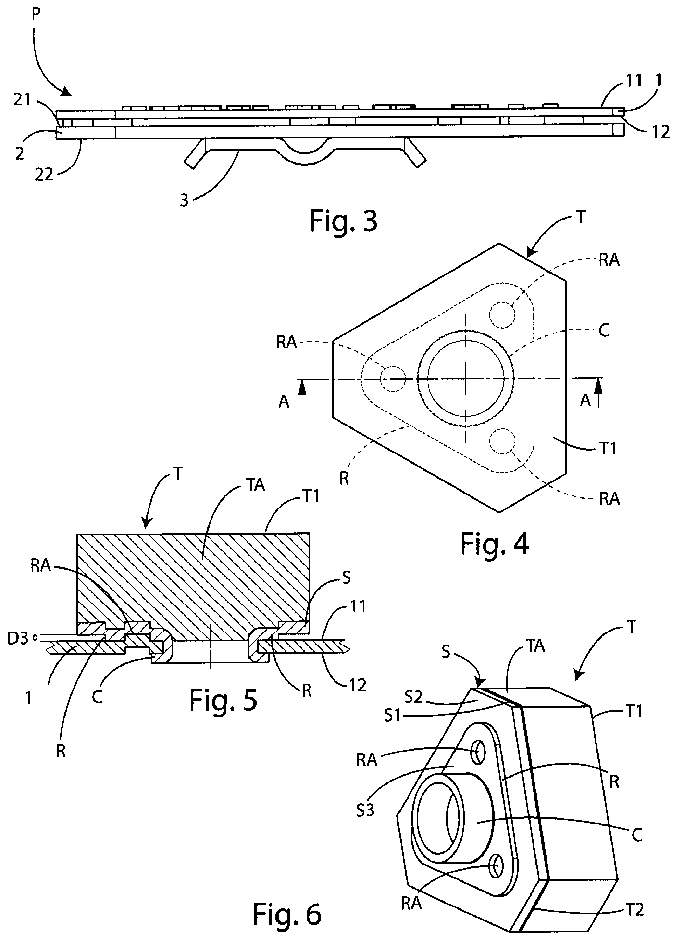

With particular reference to figures 4-6, each friction material button T comprises a respective metal supporting element S. In detail, the button T comprises a portion of friction material TA which has a first surface or friction surface T1 destined to come into contact with the surface of the disc, and a second surface T2, opposite said first surface T1, braze-welded onto a first surface S1 of said supporting element S.

Said supporting element S comprises coupling means C to couple a button T with the supporting plate 1 by means of a respective first through hole F1.

The supporting element S further comprises a second surface S2 and a third surface S3, parallel to and distanced with respect to said second surface S2 in a manner to form an elevation R. In other words, the third surface S3 is a surface in relief with respect to the second surface S2.

In detail, said third surface S3 is destined to come into contact with the supporting plate 1 and said elevation R allows the second surface S2 of the respective button T to be at a third predetermined distance D3 from said first face 11 of the supporting plate 1. Therefore, the fact that the third surface S3 of the supporting element S is a surface in relief with respect to the second surface S2 of said supporting element means that said second surface S2 is always distanced from the supporting plate 1 in a manner to avoid contact between said second surface and the supporting plate. Said third predetermined distance D3 may have a value between 0.5mm and 2mm, and is preferably 1 mm.

In the first embodiment described, said second surface S2 has the shape of an irregular hexagon and said third surface S3 has a substantially triangular shape.

Said coupling means C are arranged on said third surface S3.

In detail, said coupling means C comprise a collar having a cylindrical section. The collar of each button is inserted in the respective first through hole F1 and is riveted onto the supporting plate 1. Therefore, the collar is sized to be inserted in said first through hole F1.

Said third surface S3 is sized and shaped so that, when the button T is coupled with said supporting plate 1, it is arranged on a portion of the supporting plate 1 comprised between the first eyelets 5 of a respective group of first eyelets. In greater detail, said third surface S3 is sized and shaped so as to match with an inner edge of each first eyelet of a group of first eyelets, i.e. the edge of each eyelet which is turned towards a first through hole F1.

In other words, when a button T is coupled with the supporting plate 1, the surface portion of the supporting plate 1 comprised between the first eyelets 5 of a group of first eyelets is the contact surface (indicated below with reference CS) between the button T and said supporting plate 1.

The dimensions and shape of the third surface S3 are such as to avoid said third surface S3 being superimposed on the first eyelets 5 of said group of first eyelets and the first portions 7 (alternating with the first eyelets 5 of said group of first eyelets), so that the latter are free to be deformed. In fact, due to elevation R, the second surface S2 of the supporting element S also is not superimposed either on the first eyelets 5 of a group of first eyelets or on the first portions 7, so that the latter are free to be deformed. In other words, due to elevation R, the second surface S2 is not able to come into contact either with the first eyelets 5 of a group of first eyelets or the first portions 7.

In the first embodiment described, the third surface S3 is smaller than the first surface S1 of the supporting element S and the friction surface T1 of the button T.

Furthermore, the contact surface (indicated below with reference CS) between the button T and the supporting plate 1 is smaller than the friction surface T1 of the single button T.

In the first embodiment described, said coupling means C and said supporting element S are a single piece, although this is not necessary. Said coupling means C and said elevation R formed between the second surface S2 and the third surface S3 are obtained on each supporting element S by means of cold plastic deformation.

In a first variant, not shown in the figures, it is possible for the supporting plate to be provided with a spacer for each group of first eyelets, at each button. Each spacer is sized to occupy an area enclosed by the first eyelets of each group of first eyelets and has a predetermined thickness. In this manner, the distance between the second surface S2 of the supporting element S of each button and the supporting plate 1 is equal to the sum of the elevation R and the thickness of the spacer.

In a second variant, not shown in the figures, it is possible to provide for each button T not to have the elevation R (and therefore not to have the third surface S3 in relief with respect to the second surface S2), and that only the supporting plate 1 is provided with a spacer having a predetermined thickness for each group of first eyelets, at each button, sized to occupy an area of the supporting plate 1 enclosed by the first eyelets of each group of first eyelets.

Each anti-rotation element MA which prevents rotation of the button T and blocks the orientation of button T on the supporting plate 1 comprises a bulge, afforded on the supporting plate 1, which is inserted into a respective housing RA with which each supporting element is provided.

In the first embodiment described, for each button T present on the supporting plate 1, there are three anti-rotation elements MA arranged at the vertices of an equilateral triangle, the inscribed circumference of which is concentric with said first through holes F1.

Said collar C and said anti-rotation elements MA form an interlocking rigid constraint between the supporting plate 1 and a respective button T arranged on it.

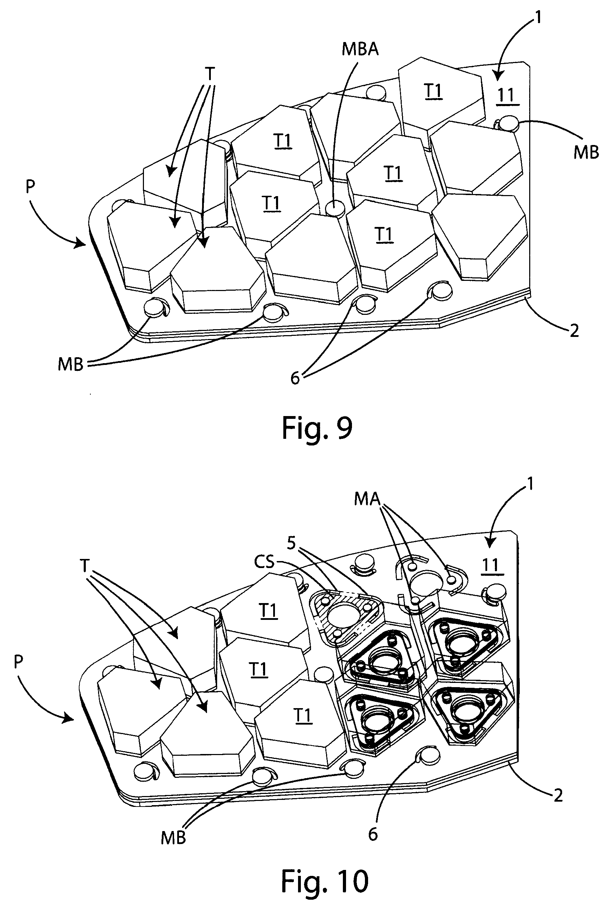

The first portions 7 of the supporting plate interposed between said first eyelets 5 of each group of first eyelets, due to elevation R and to the spacers 23 interposed between the supporting plate 1 and the base plate 2 may be bent and/or twisted in the elastic field, so that the contact surfaces (one of which is indicated with reference CS in figure 10) between the supporting plate 1 and the buttons T (i.e. the contact surfaces between the supporting plate and the third surface S3 of the supporting element S of each button T) remain parallel to the disc surface, even under the effect of normal forces and consequent tangential forces and thermal expansions. Consequently, the friction surfaces T1 of each button also remain parallel to the disc surface. There is consequently regular and uniform wear and tear of the buttons T (so-called flat and parallel wear and tear), since the friction surface T1 of each button T remains parallel both to the disc surface and to the contact surface (indicated below with reference CS) between the supporting plate 1 and the third surface S3 of the supporting element S of the respective button.

In other words, each of the first portions 7 of the supporting plate 1 present between the first eyelets 5 acts as an elastic hinge between the contact surface with each button T of the supporting plate 1 and the remaining part of the supporting plate 1.

Advantageously, the first eyelets 5 arranged on the supporting plate 1 lead to flexural yieldability of the button T such that, at the start of the braking phase, the friction surface T1 of each button T is slightly more charged at the portion of said friction surface T1 which first meets an imaginary point of the disc during its rotation, as a consequence of the bending moment given by the friction force with respect to each first through hole. In this manner, any water films present on the surface of the disc are broken, avoiding aquaplaning of buttons T.

With reference to the second eyelets 6 arranged in proximity to the second through holes F2, said second eyelets 6 are curved. In detail, each second eyelet 6 is arranged at a second predetermined distance D2 from the centre of a respective second through hole F2. In greater detail, each second eyelet 6 has the section of a circumference arc, which has the centre of the respective second through hole F2 as its centre and subtends an angle of around 120°. Said second predetermined distance D2 may have a value between 5mm and 7mm, and is preferably 5mm. The width of each second eyelet has a value between 1mm and 4mm, preferably 2mm.

Furthermore, the second eyelets 6 are arranged on the supporting plate 1 in a manner that the centre of each second eyelet 6 is positioned on a line which joins the centre of the respective second through hole 2 and the centre of gravity BA.

Said second eyelets 6 determine at said second through holes F2 a yieldability between the supporting plate 1 and the base plate 2, so that the portions of the supporting plate 1 around said second through holes F2 may bend and/or twist.

No eyelet is provided in proximity to the third through hole F3, so that the supporting plate 1 and the base plate 2 are rigidly constrained at the centre of gravity BA of the group of areas of the first through holes F1. Therefore, the thermal expansions of the supporting plate 1 extend radially starting from said centre of gravity BA, and also around it, and are absorbed by the second eyelets 6.

As already said, said second through holes F2 and said third through hole F3 allow coupling of said supporting plate 1 with the base plate 2.

For this purpose, each of said second through holes F2 allows insertion of a respective blocking element MB and said third through hole F3 allows insertion of a further blocking element MBA.

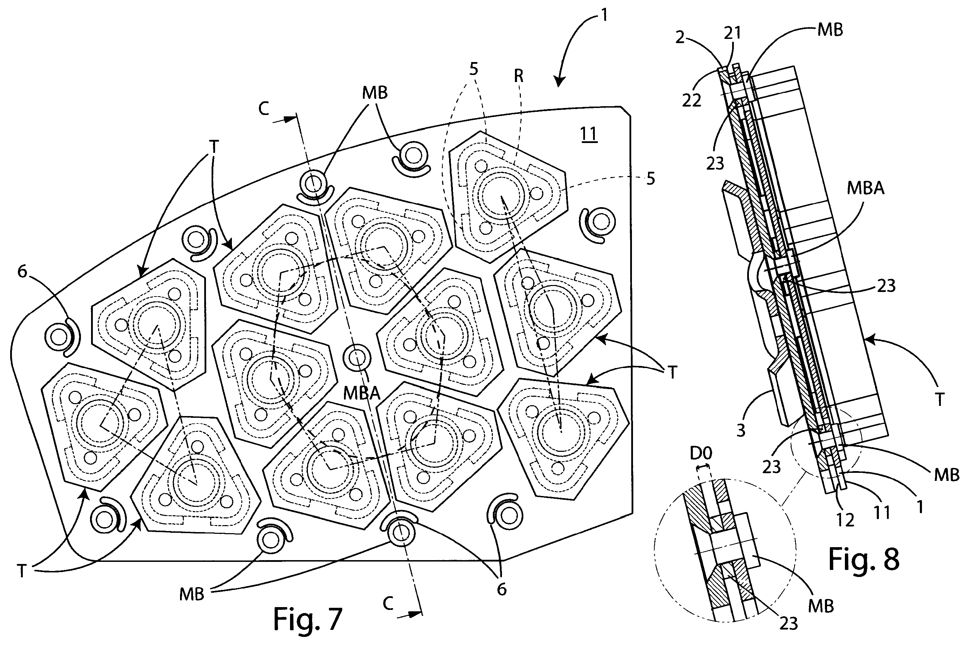

As already said, said supporting plate 1 and said base plate 2 are coupled in a manner to be at a predetermined distance D0 from each other by means of interposition of spacers 23. In detail, each spacer 23 is positioned at a respective second through hole F2 and the third through hole F3. A detail of figure 8 shows a spacer 23 interposed between the supporting plate 1 and the base plate 2 at a second through hole 2 into which a blocking element MB is inserted. Said predetermined distance D0 may have a value between 2mm and 3mm, and is preferably 2mm.

It is preferable for each spacer to comprise a washer.

Furthermore, the supporting plate 1 and the base plate 2 may be coupled in a fixed or removable way. Consequently, in a first alternative, said blocking elements MB and MBA may be fixed blocking elements, such as rivets, etc., or, in a second alternative, said blocking elements MB and MBA may comprise pistons to be fixed to the base plate 1 to block the supporting plate 1 to the base plate 2 by means of split pins, elastic stop rings, etc., in a manner to be able to regenerate the friction pad, replacing the supporting plate 1 bearing buttons T worn from use and recovering both the base plate 2 and the dovetail element 3 fixed to it.

Although not shown in the figures associated with the first embodiment, it is possible to provide any number of first through holes F1 and second through holes F2, without deviating from the scope of the invention.

In the first embodiment described, the supporting plate 1 is made of steel with properties such as to allow, after removal of material for creation of the first through holes, the second through holes, the third through hole and also the first eyelets 5 and the second eyelets 6, temper and tempering at a tempering temperature higher than 500°C. An example of said steel is AISI 422.

Furthermore, in the first embodiment described, the supporting plate 1 supports twelve buttons T (figs. 7-10).

Each button T has a friction surface T1 between 10cm² and 15cm² and has the section of an irregular hexagon. Said friction surface T1 also has the section of an irregular hexagon. In detail, each button T has three first sides, having a first length, alternating with three second sides, having a second length, where said second length is shorter than said first length. Each button T is coupled on said supporting plate 1 in a manner that projection onto the supporting plate 1 of the sides of button T of a shorter length is turned towards a portion of a respective first eyelet 5 comprising the vertex of the parabola.

However, although not shown in the figures associated with the first embodiment, the supporting plate 1 may support any number of buttons T, and said buttons T may have any section, for example a triangular section, without deviating from the scope of the invention. Consequently, the friction surface T1 of the button may also have a triangular section or any section.

As already said, the supporting plate 1 has a plurality of groups of first eyelets. At each group of first eyelets a respective button T is arranged.

In detail, a first group of six buttons T is arranged on the first central part of the supporting plate 1, a second group of three buttons T is arranged on the second side part of the supporting plate 1 and a third group of three buttons T is arranged on the third side part.

The six buttons T of the first group of buttons are positioned in the first central part of the supporting plate 1 in a manner that each of said buttons T has a side of shorter length turned towards the centre of gravity BA.

As visible, since each button is arranged at a group of first eyelets, the centres of each button T are arranged at the vertices of an irregular hexagon which corresponds with the irregular hexagon formed of the centres of gravity of each triangle formed by the first eyelets 5 of each group of first eyelets.

The buttons T of each second group of buttons and of each third group of buttons are positioned on the supporting plate 1 in a manner that the centres of each button T are arranged at the vertices of a respective isosceles triangle. Said isosceles triangle corresponds with the isosceles triangle which is formed of the centres of gravity of each equilateral triangle formed by the first eyelets 5 of each group of first eyelets.

Figure 8 shows the section along axis C-C passing along the centre of gravity BA of the group of areas of the first through holes F1 arranged on the supporting plate 1. The anti-rotation elements MA, the supporting plate 1, the base plate 2 and the dovetail element 3 are visible from the section.

Figure 9 is a perspective view of the supporting plate 1 with the twelve buttons T arranged on it.

Figure 10 is a perspective view of the supporting plate 1 from which two buttons T have been removed and four buttons T are in transparency to show how a button T is positioned on the supporting plate 1 at a respective group of first eyelets.

Furthermore, on a surface portion of the supporting plate 1, the area enclosed by the first eyelets 5 of a group of first eyelets 5 (at one of the two removed buttons), is shown by a broken line to indicate that this is the contact surface CS between the button T and the supporting plate 1. As already said, the third surface S3 of the supporting element S (i.e. the part of the button which comes into contact with the supporting plate) is sized and shaped to occupy said area and not to be superimposed either on the first eyelets 5 of a group of first eyelets or on the first portions 7 alternating with said eyelets. Furthermore, due to elevation R, the second surface S2 of the supporting element S also is not superimposed and does not come into contact with the first eyelets 5 of a group of first eyelets or with the first portions 7 alternating with said first eyelets.

In the first embodiment described, said contact surface CS has a substantially triangular shape and the third surface S3 of each supporting element S (destined to come into contact with the supporting plate) has a substantially triangular shape. However, said contact surface, like the third surface of each supporting element, may have a circular shape (as described below with reference to the fourth and fifth embodiments) or a convex polygonal shape.

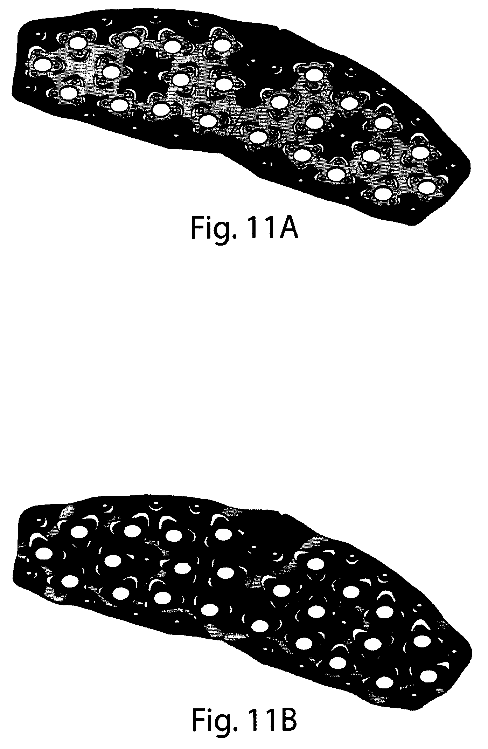

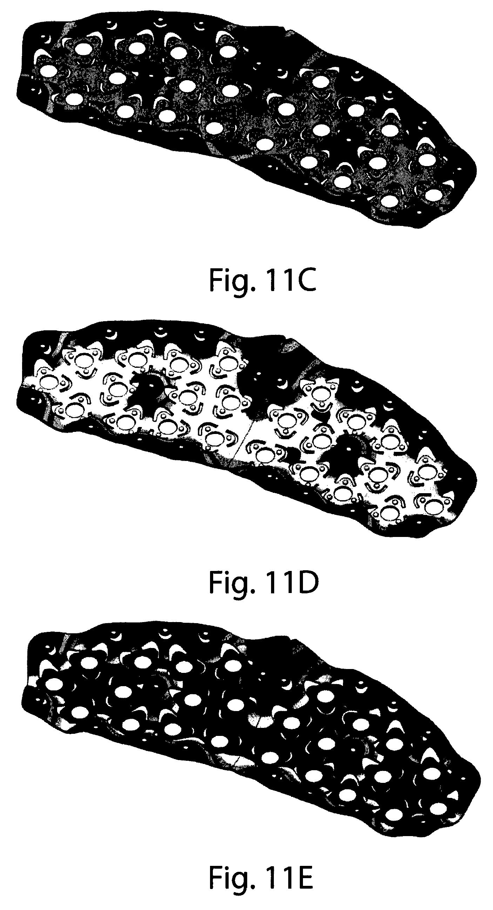

Figures 11A-11E show two adjacent supporting plates deformed in the elastic field by the forces applied, each of which belongs to a respective friction pad, at different time instants.

The deformations of the two supporting plates 1 are mainly visible by observing the edges of said two plates, the first eyelets 5 and the second eyelets 6.

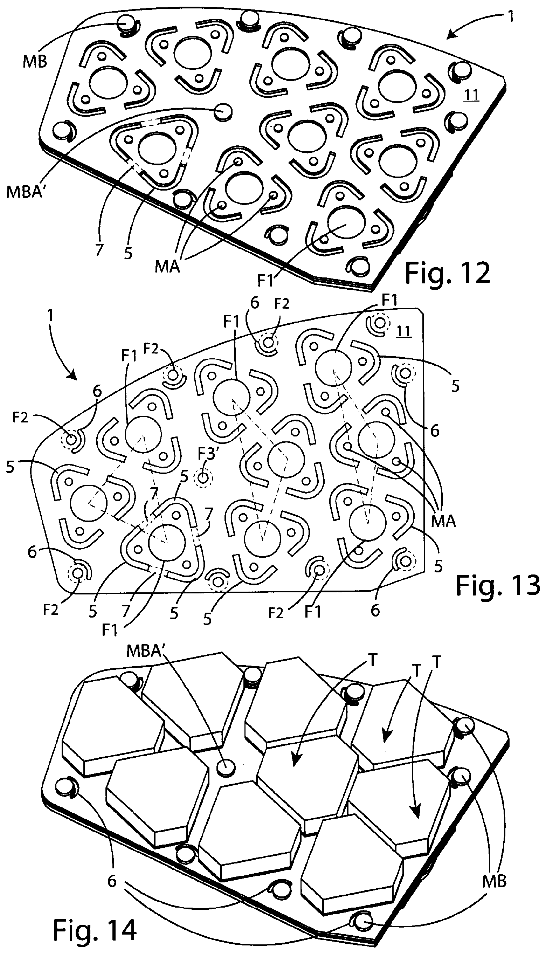

A second embodiment of a supporting plate 1 of a friction pad P to support friction material buttons T for disc brakes of railway wheeled vehicles is shown in figure 12.

Differently to the first embodiment described, the supporting plate 1 is provided with nine groups of first eyelets.

Three first groups of first eyelets are arranged on the central part of said supporting plate 1, three second groups of first eyelets are arranged on the second side part and three third groups of first eyelets are arranged on the third side part.

The centres of gravity of each triangle formed by the first eyelets of each of said groups of first eyelets are arranged at the vertices of a respective isosceles triangle, where each vertex coincides with the centre of a respective through hole F1 (figure 13).

Furthermore, differently to the first embodiment, the third through hole indicated in this embodiment with reference F3', to allow insertion of a further blocking element indicated in this embodiment with reference MBA', is arranged in proximity to the centre of gravity BA defined by the group of areas of the first through holes F1.

Figure 14 is a perspective view of the supporting plate 1 with the nine buttons T arranged on it.

Differently to the buttons T arranged on the first embodiment of the supporting plate 1, each button T has a friction surface T1 between 16cm² and 18cm².

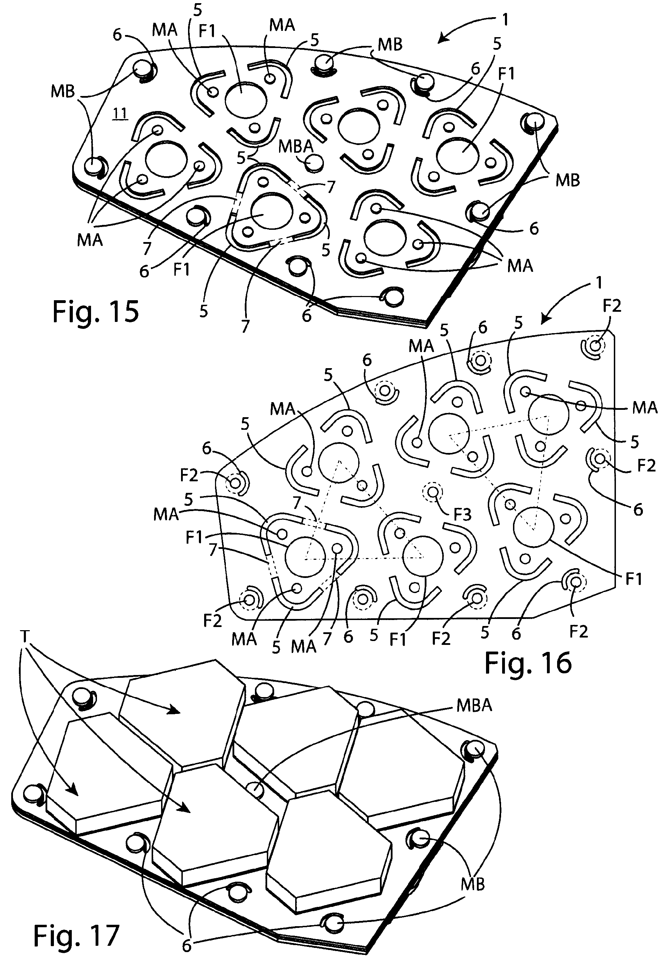

A third embodiment of a supporting plate 1 of a friction pad P to support friction material buttons T for disc brakes of railway wheeled vehicles is shown in figure 15.

Differently to the first embodiment described, the supporting plate 1 is provided with six groups of first eyelets.

The supporting plate is therefore provided with three first groups of first eyelets and three second groups of first eyelets.

The centres of gravity of each triangle formed by the first eyelets of each of said groups of first eyelets are arranged at the vertices of a respective isosceles triangle, where each vertex coincides with the centre of a respective through hole F1 (figure 16).

Figure 17 is a perspective view of the supporting plate 1 with the six buttons T arranged on it.

Differently to the buttons T arranged on the first embodiment of the supporting plate 1, each button T has a friction surface T1 between 24cm² and 26cm².

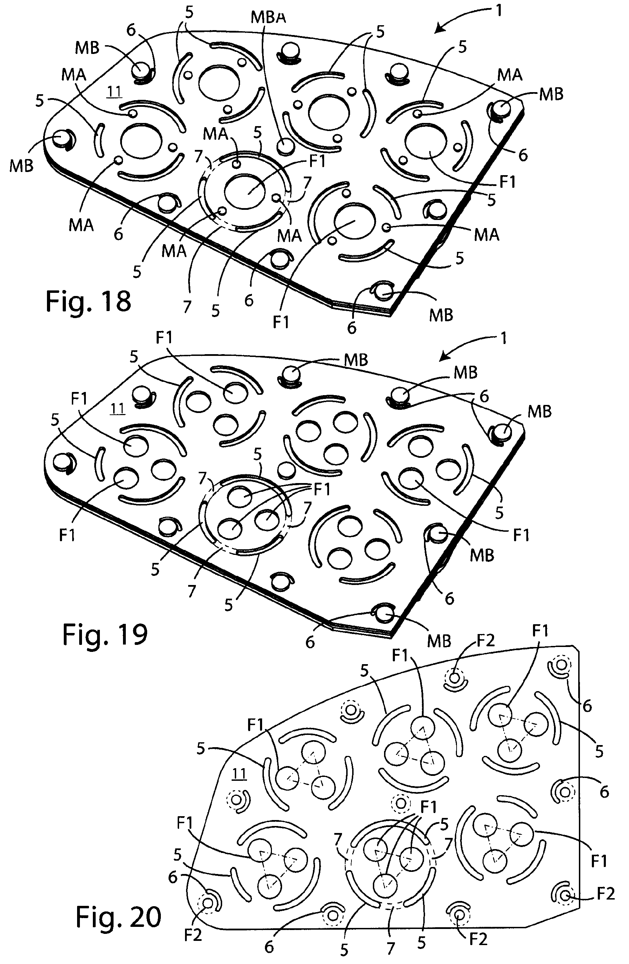

A fourth embodiment of a supporting plate 1 to support friction material buttons T for disc brakes of railway wheeled vehicles is shown in figure 18.

Like the third embodiment, the supporting plate 1 is provided with six groups of first eyelets.

However, differently to the third embodiment, the first eyelets 5 of each group of first eyelets are arranged along a circumference. Said circumference is concentric to a respective first through hole F1.

Consequently, although not shown, at least the third surface S3 of the supporting element S has a circular form.

A fifth embodiment of a supporting plate 1 to support friction material buttons T for disc brakes of railway wheeled vehicles is shown in figure 19.

In detail, like the third embodiment, the supporting plate 1 is configured to support six buttons and the first eyelets 5 of each group of first eyelets are arranged along a circumference.

Differently to the third embodiment, where each group of first eyelets is arranged around a first through hole F1, each group of first eyelets is arranged around a plurality of first through holes F1.

In detail, each group of first eyelets is arranged around a plurality of first through holes F1, arranged in a manner that the centres of said first through holes are at a respective vertex of an equilateral triangle (figure 20). In greater detail, said equilateral triangle is inscribed in a circumference which is concentric with the circumference along which the first eyelets of each group of first eyelets are arranged.

In the fifth embodiment described, each group of first eyelets is arranged around three first through holes F1. However, although not shown in the figures, each group of first eyelets may be arranged around two through holes or a number of first through holes higher than three.

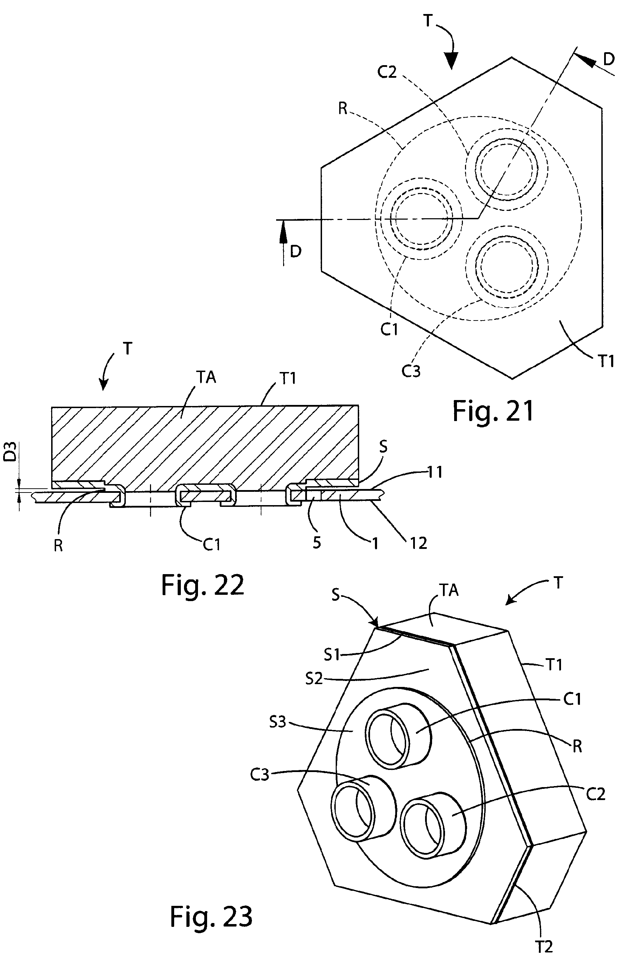

Figures 21-23 show a button T to be coupled with the fifth embodiment of the supporting plate.

Differently to button T to be coupled with the first embodiment of the supporting plate 1 (shown in figures 4-6), the supporting element S of the button T, which may be coupled with the fifth embodiment of the supporting plate 1, comprises first coupling means C1, second coupling means C2 and third coupling means C3 to couple the button T to the supporting plate 1. In the fifth embodiment described, said first coupling means C1, said second coupling means C2, said third coupling means C3 and said supporting element S are a single piece, although this is not necessary. Each of said coupling means C1, C2, C3 comprises respectively a collar having a cylindrical section. Each collar is inserted in a respective first through hole F1 and is riveted onto the supporting plate 1.

Said first coupling means, said second coupling means and said third coupling means are arranged on the third surface S3 of the supporting element S at the vertices of an equilateral triangle.

Furthermore, the third surface S3 of the supporting element S has a circular shape and is sized to come into contact with the area enclosed by the first eyelets 5 of a group of first eyelets arranged along a circumference. Consequently, the contact surface CS between the button T and the supporting plate 1 has a circular shape.

Advantageously, the supporting plate 1 forming the object of the invention protects against irregular wear and tear both of the friction material buttons and the disc surface, since it allows a substantially uniform distribution of the contact pressures between the buttons T and the disc surface, and therefore the normal and tangential forces exerted on said buttons. In detail, pressures and forces act on a button T which are substantially the same pressures and the same forces exerted on the other buttons T arranged on the same supporting plate 1.

Furthermore, the fact that the contact pressures are distributed in a substantially uniform way guarantees a uniform distribution of the temperature field on the disc surface, at the portions which contain the radial projections of the buttons.

The present invention has been described for non-limiting illustrative purposes, according to its preferred embodiments, but it is to be considered that any variations and/or modifications may be made by experts in the field without departing from the relative scope of protection, as defined by the appended claims.

## Claims

1. A supporting plate (1) for supporting a plurality of friction material buttons (T) for disc brakes of railway wheeled vehicles, comprising:
- at least a first through hole (F1) to allow coupling of each button (T) with said supporting plate (1); each first through hole (F1) defining an area and the group of areas of each first through hole (F1) defining a centre of gravity (BA) on said supporting plate (1),
- a plurality of second through holes (F2) for the insertion of a respective blocking element (MB) so as to couple said supporting plate (1) with a base plate (2); said second through holes (F2) being arranged in proximity to the perimeter of said supporting plate (1),
**characterised in that** it further comprises :
- at least one group of first eyelets or slots (5) arranged around said at least first through hole (F1), each group of first eyelets (5) comprising at least two first eyelets (5),
where said first eyelets (5) alternate with first portions (7) of the supporting plate, so that, in the braking phase of a railway wheeled vehicle, in the presence or absence of a temperature difference between said supporting plate (1) and said base plate (2), said first portions (7) are deformed in the elastic field, due to the effect of normal forces applied on said buttons (T), in such a way that distributions of contact pressure on the buttons (T) are substantially uniform with each other.

2. The supporting plate according to the previous claim, **characterised in that** each group of first eyelets (5) is arranged around said at least a first through hole (F1).

3. The supporting plate (1) according to any one of the previous claims, **characterised in that** each group of first eyelets (5) is arranged around at least two first through holes (F1).

4. The supporting plate (1) according to any one of the previous claims, **characterised in that** it comprises a third through hole (F3, F3') for insertion of a further blocking element (MBA, MBA'), so as to further couple said supporting plate (1) with said base plate (2); said third through hole (F3, F3') being arranged at or in proximity to said centre of gravity (BA).

5. The supporting plate (1) according to any one of the previous claims, **characterised in that** it comprises at least a second eyelet or slot (6) arranged in proximity to at least a second through hole (F2), preferably a second eyelet (6) for each second through hole (F2).

6. The supporting plate (1) according to the previous claim, **characterised in that** each of said second eyelets (6) is curved and is arranged on said supporting plate (1) at a second predetermined distance (D2) from a respective second through hole (F2).

7. The supporting plate (1) according to any one of the previous claims, **characterised in that** it comprises at least one anti-rotation element (MA) to prevent rotation of a respective button (T) and to block orientation of said button on said supporting plate (1).

8. The supporting plate (1) according to any one of the previous claims, **characterised in that** each group of first eyelets comprises three first eyelets (5).

9. The supporting plate (1) according to the previous claim, **characterised in that** said three first eyelets (5) are arranged at the vertices of a triangle; each first eyelet being arranged on said supporting plate (1) at a first predetermined distance (D1) from said first through holes (F1).

10. The supporting plate (1) according to any one of claims 1-9, **characterised in that** it comprises twelve first through holes (F1), where six first through holes (F1) are arranged on a first central part of said supporting plate (1), three first through holes (F1) are arranged on a second side part of said supporting plate (1) and three first through holes (F1) are arranged on a third side part of said supporting plate (1); said supporting plate (1) comprising twelve groups of first eyelets, one for each first through hole (F1), where six first groups of first eyelets are arranged on said first central part of said supporting plate (1), three second groups of first eyelets are arranged on said second side part of said supporting plate (1) and three third groups of first eyelets are arranged on said third side part of said supporting plate (1).

11. The supporting plate (1) according to claim 9 and 10, **characterised in that** the centres of said six first through holes (F1) provided on the first central part of said supporting plate (1) are arranged at the vertices of an irregular hexagon; said irregular hexagon having said centre of gravity (BA) as a centre and being formed of six equal sides, **in that** the centres of said three first through holes (F1) provided on the second side part of said supporting plate (1) are arranged at the vertices of a first triangle and **in that** the centres of said three first through holes (F1) provided on the third side part of said supporting plate (1) are arranged at the vertices of a second triangle; the centre of each first through hole (F1) coinciding with the centre of gravity of a respective triangle formed by said three first eyelets (5) of each group of first eyelets.

12. The supporting plate (1) according to any one of claims 1-9, **characterised in that** it comprises nine first through holes (F1), where three first through holes (F1) are arranged on a first central part of said supporting plate (1), three first through holes (F1) are arranged on a second side part of said supporting plate (1) and three first through holes (F1) are arranged on a third side part of said supporting plate (1); said supporting plate (1) comprising nine groups of first eyelets, one for each first through hole (F1), where three first groups of first eyelets are arranged on said first central part of said supporting plate (1), three second groups of first eyelets are arranged on said second side part of said supporting plate (1) and three third groups of first eyelets are arranged on said third side part of said supporting plate (1).

13. The supporting plate (1) according to claims 9 and 12, **characterised in that** the centres of said three first through holes (F1) provided on the first central part of said supporting plate (1) are arranged at the vertices of a first triangle, **in that** the centres of said three first through holes (F1) provided on the second side part of said supporting plate (1) are arranged at the vertices of a second triangle and **in that** the centres of said three first through holes (F1) provided on the third side part of said supporting plate (1) are arranged at the vertices of a third triangle.

14. The supporting plate (1) according to any one of claims 1-9, **characterised in that** it comprises six first through holes (F1); said supporting plate (1) comprising six groups of first eyelets, one for each first through hole (F1), where the centres of three first through holes (F1) are arranged at the vertices of a first triangle and the centres of three first through holes (F1) are arranged at the vertices of a second triangle.

15. The supporting plate (1) according to any one of claims 1-8, **characterised in that** the first eyelets (5) of each group of first eyelets are arranged along a circumference.

16. The supporting plate (1) according to the previous claim, **characterised in that** each group of first eyelets (5) is arranged around three first through holes (F1), where the centres of said three first through holes (F1) are arranged at the vertices of a triangle inscribed in a concentric circumference to the circumference along which said first eyelets (5) are arranged.

17. The supporting plate (1) according to any one of the previous claims, **characterised in that** said supporting plate (1) is made of steel, preferably AISI 422.

18. A friction pad (P) comprising a supporting plate (1) according to any one of the previous claims, and a plurality of friction material buttons (T), where each button (T) comprises at least first coupling means (C, C1, C2, C3) to be coupled with at least a first through hole (F1) of said supporting plate (1); each button being coupled on said supporting plate (4) at a respective group of first eyelets (5).

19. The friction pad (1) according to claim 18, **characterised in that** said supporting plate (1) comprises a spacer for each group of first eyelets, sized to occupy an area of said supporting plate (1) defined by the first eyelets (5) of each group of first eyelets and having a predetermined thickness, and **in that** each button (T) comprises a portion of friction material (TA) and a supporting element (S), where said supporting element (S) comprises a first surface (S1) in contact with said portion of friction material (TA), and also a second surface (S2), opposite said first surface (S1).

20. The friction pad (P) according to claim 18, **characterised in that** each button (T) comprises a portion of friction material (TA) and a supporting element (S), where said supporting element (S) comprises a first surface (S1) in contact with said portion of friction material (TA) and also a second surface (S2) and a third surface (S3), parallel to and spaced from said second surface (S2) so as to form an elevation (R), so that, when a button (T) is coupled with said supporting plate (1), said third surface (S3) comes into contact with said supporting plate (1) and said second surface (S2) is at a third predetermined distance (D3) from said supporting plate (1).

21. The friction pad (P) according to the previous claim, **characterised in that** said supporting plate (1) comprises a spacer for each group of first eyelets, sized to occupy an area of said supporting plate (1) defined by the first eyelets (5) of each group of first eyelets and having a predetermined thickness.

22. The friction pad (P) according to claim 20 or 21, **characterised in that** said third surface (S3) of said supporting element (S) has a substantially triangular shape or a circular shape or a convex polygonal shape.

23. The friction pad (P) according to any one of claims 18-22, **characterised in that** each button (T) has a section of an irregular hexagon, said irregular hexagon having three first sides, having a first length, alternated with three second sides, having a second length, where said second length is shorter than said first length.

24. The friction pad (P) according to any one of claims 18-22, **characterised in that** each button (T) has a section of a triangle.

25. The friction pad (P) according to any one of claims 18-24, **characterised in that** it comprises a base plate (2), a dovetail element (3); said base plate (2) being coupled to said supporting plate (1) by means of at least one spacer (23) in such a way as to be at a predetermined distance (D0) from said supporting plate (1), and said dovetail element (3) being fixed to said base plate (2).

## Patentansprüche

1. Halteplatte (1) zum Halten einer Vielzahl von Reibmaterialknöpfen (T) für Scheibenbremsen von Schienenwegradfahrzeugen, umfassend:
- mindestens eine erste Durchgangsöffnung (F1), um eine Verbindung jedes Knopfs (T) mit der Halteplatte (1) zu erlauben; wobei jedes erste Durchgangsloch (F1) einen Bereich definiert und die Gruppe der Bereiche jedes ersten Durchgangslochs (F1) einen Schwerpunkt (BA) auf der Haltplatte (1) definiert,
- eine Vielzahl von zweiten Durchgangsöffnungen (F2) zum Einführen eines jeweiligen Blockierelements (MB), um die Halteplatte (1) mit einer Basisplatte (2) zu verbinden, wobei die zweiten Durchgangsöffnungen (F2) in der Nähe des Umfangs der Halteplatte (1) angeordnet sind,
**dadurch gekennzeichnet, dass** sie weiter aufweist:
- mindestens eine Gruppe von ersten Ösen oder Schlitzen (5), die um die mindestens eine Durchgangsöffnung (F1) angeordnet sind, wobei jede Gruppe von ersten Ösen (5) mindestens zwei erste Ösen (5) aufweist,
wobei die ersten Ösen (5) mit ersten Abschnitten (7) der Halteplatte abwechseln, so dass in der Bremsphase eines Schienenwegradfahrzeugs bei der Anwesenheit oder Abwesenheit einer Temperaturdifferenz zwischen der Halteplatte (1) und der Basisplatte (2) die ersten Abschnitte (7) in dem elastischen Feld deformiert werden aufgrund der Wirkung von Normalkräften, die auf die Knöpfe (T) ausgeübt werden in der Weise, dass Verteilungen von Berührungsdrücken auf die Knöpfe (T) im Wesentlichen einheitlich miteinander sind.

2. Halteplatte gemäß dem vorangehenden Anspruch, **dadurch gekennzeichnet, dass** jede Gruppe von ersten Ösen (5) um die mindestens eine Durchgangsöffnung (F1) angeordnet ist.

3. Halteplatte (1) gemäß einem der vorangehenden Ansprüche, **dadurch gekennzeichnet, dass** jede Gruppe von ersten Ösen (5) um mindestens zwei erste Durchgangsöffnungen (F1) angeordnet ist.

4. Halteplatte (1) gemäß einem der vorangehenden Ansprüche, **dadurch gekennzeichnet, dass** sie eine dritte Durchgangsöffnung (F3, F3') aufweist zum Einführen eines weiteren Blockierelements (MBA, MBA'), um die Halteplatte (1) weiterhin mit der Basisplatte (2) zu verbinden, wobei die dritte Durchgangsöffnung (F3, F3') an oder in der Nähe des Schwerpunktes (BA) angeordnet ist.

5. Halteplatte (1) gemäß einem der vorangehenden Ansprüche, **dadurch gekennzeichnet, dass** sie mindestens eine zweite Öse oder einen Schlitz (6) aufweist, angeordnet in der Nähe mindestens einer zweiten Durchgangsöffnung (F2), vorzugsweise eine zweite Öse (6) für jede zweite Durchgangsöffnung (F2).

6. Halteplatte (1) gemäß dem vorangehenden Anspruch, **dadurch gekennzeichnet, dass** jede der zweiten Ösen (6) gekrümmt ist und auf der Halteplatte (1) in einem zweiten vorbestimmten Abstand (D2) von einer jeweiligen zweiten Durchgangsöffnung (F2) angeordnet ist.

7. Halteplatte (1) gemäß einem der vorangehenden Ansprüche, **dadurch gekennzeichnet, dass** sie mindestens ein Antirotationselement (MA) aufweist, um eine Rotation eines jeweiligen Knopfs (T) zu verhindern und die Orientierung des Knopfs auf der Halteplatte (1) zu blockieren.

8. Halteplatte (1) gemäß einem der vorangehenden Ansprüche, **dadurch gekennzeichnet, dass** jede Gruppe von ersten Ösen drei erste Ösen (5) aufweist.

9. Halteplatte (1) gemäß dem vorangehenden Anspruch, **dadurch gekennzeichnet, dass** die drei ersten Ösen (5) an den Ecken eines Dreiecks angeordnet sind, wobei jede erste Öse auf der Halteplatte (1) in einem ersten vorbestimmten Abstand (D1) von den ersten Durchgangsöffnungen (F1) angeordnet ist.

10. Halteplatte (1) gemäß einem der Ansprüche 1-9, **dadurch gekennzeichnet, dass** sie zwölf erste Durchgangsöffnungen (F1) aufweist, wobei sechs erste Durchgangsöffnungen (F1) auf einem ersten Mittelteil der Halteplatte angeordnet sind, drei erste Durchgangsöffnungen (F1) auf einem zweiten Seitenteil der Halteplatte (1) angeordnet sind und drei erste Durchgangsöffnungen (F1) auf einem dritten Seitenteil der Halteplatte (1) angeordnet sind, wobei die Halteplatte (1) zwölf Gruppen von ersten Ösen aufweist, eine für jede erste Durchgangsöffnung (F1), wobei sechs erste Gruppen von ersten Ösen angeordnet sind auf dem ersten Mittelteil der Halteplatte (1), drei zweite Gruppen von ersten Ösen angeordnet sind auf dem zweiten Seitenteil der Halteplatte (1) und drei dritte Gruppen von ersten Ösen angeordnet sind auf dem dritten Seitenteil der Halteplatte (1).

11. Halteplatte (1) gemäß Anspruch 9 und 10, **dadurch gekennzeichnet, dass** die Mittelpunkte der sechs ersten Durchgangsöffnungen (F1), die auf dem ersten Mittelteil der Halteplatte (1) vorgesehen sind, an den Ecken eines unregelmäßigen Sechsecks angeordnet sind, wobei das unregelmäßige Sechseck den Schwerpunkt (BA) als Mittelpunkt hat und durch sechs gleiche Seiten gebildet wird, dass die Mittelpunkte der drei ersten Durchgangsöffnungen (F1), die auf dem zweiten Seitenteil der Halteplatte (1) vorgesehen sind, an den Ecken eines ersten Dreiecks angeordnet sind, und dass die Mittelpunkte der drei ersten Durchgangsöffnungen (F1), die auf dem dritten Seitenteil der Halteplatte (1) vorgesehen sind, an den Ecken eines zweiten Dreiecks angeordnet sind, wobei der Mittelpunkt jeder ersten Durchgangsöffnung (F1) mit dem Schwerpunkt eines jeweiligen Dreiecks zusammenfällt, das von den drei Ösen (5) jeder Gruppe von ersten Ösen gebildet wird.

12. Halteplatte (1) gemäß einem der Ansprüche 1-9, **dadurch gekennzeichnet, dass** sie neun erste Durchgangsöffnungen (F1) aufweist, wobei drei erste Durchgangsöffnungen (F1) auf einem ersten Mittelteil der Halteplatte (1) angeordnet sind, drei erste Durchgangsöffnungen (F1) auf einem zweiten Seitenteil der Halteplatte (1) angeordnet sind und drei erste Durchgangsöffnungen (F1) auf einem dritten Seitenteil der Halteplatte (1) angeordnet sind, wobei die Halteplatte (1) neun Gruppen von ersten Ösen aufweist, eine für jede erste Durchgangsöffnung (F1), wobei drei erste Gruppen von ersten Ösen angeordnet sind auf dem ersten Mittelteil der Halteplatte (1), drei zweite Gruppen von ersten Ösen angeordnet sind auf dem zweiten Seitenteil der Halteplatte (1) und drei dritte Gruppen von ersten Ösen angeordnet sind auf dem dritten Seitenteil der Halteplatte (1).

13. Halteplatte (1) gemäß den Ansprüchen 9 und 12, **dadurch gekennzeichnet, dass** die Mittelpunkte der drei ersten Durchgangsöffnungen (F1), die auf dem ersten Mittelabschnitt der Halteplatte (1) vorgesehen sind, an den Ecken eines ersten Dreiecks angeordnet sind, dass die Mittelpunkte der drei ersten Durchgangsöffnungen (F1), die auf dem zweiten Seitenteil der Halteplatte (1) vorgesehen sind, an den Ecken eines zweiten Dreiecks angeordnet sind, und dass die Mittelpunkte der drei ersten Durchgangsöffnungen (F1), die auf dem dritten Seitenteil der Halteplatte (1) vorgesehen sind, an den Ecken eines dritten Dreiecks angeordnet sind.

14. Halteplatte (1) gemäß einem der Ansprüche 1-9, **dadurch gekennzeichnet, dass** sie sechs erste Durchgangsöffnungen (F1) aufweist, wobei die Halteplatte (1) sechs Gruppen von ersten Ösen aufweist, eine für jede erste Durchgangsöffnung (F1), wobei die Mittelpunkte der drei ersten Durchgangsöffnungen (F1) an den Ecken eines ersten Dreiecks und die Mittelpunkte von drei ersten Durchgangsöffnungen (F1) an den Ecken eines zweiten Dreiecks angeordnet sind.

15. Halteplatte (1) gemäß einem der Ansprüche 1-8, **dadurch gekennzeichnet, dass** die ersten Ösen (5) jeder Gruppe von ersten Ösen entlang einem Umfang angeordnet sind.

16. Halteplatte (1) gemäß dem vorangehenden Anspruch, **dadurch gekennzeichnet, dass** jede Gruppe von ersten Ösen (5) um drei erste Durchgangsöffnungen (F1) angeordnet ist, wobei die Mittelpunkte von drei ersten Durchgangsöffnungen (F1) an den Ecken eines Dreiecks angeordnet sind, das eingeschrieben ist in einen Umfang konzentrisch zu dem Umfang entlang dem die ersten Ösen (5) angeordnet sind.

17. Halteplatte (1) gemäß einem der vorangehenden Ansprüche, **dadurch gekennzeichnet, dass** die Halteplatte (1) aus Stahl hergestellt ist, vorzugsweise A1S1 422.

18. Reibbacke (P) umfassend eine Halteplatte (1) gemäß einem der vorangehenden Ansprüche, und eine Vielzahl von Reibmaterialknöpfen (T), wobei jeder Knopf (T) mindestens erste Verbindungsmittel (C, C1, C2, C3) aufweist zur Verbindung mit mindestens einer ersten Durchgangsöffnung (F1) der Halteplatte (1), wobei jeder Knopf verbunden ist mit der Halteplatte (4) an einer jeweiligen Gruppe von ersten Ösen (5).

19. Reibbacke (P) gemäß Anspruch 18, **dadurch gekennzeichnet, dass** die Halteplatte (1) einen Abstandshalter aufweist für jede Gruppe von ersten Ösen, größenmäßig angepasst, um einen Bereich der Halteplatte (1) einzunehmen, der durch die ersten Ösen (5) jeder Gruppe von ersten Ösen definiert wird und die eine vorgegebene Dicke aufweist, und dass jeder Knopf (T) einen Teil von Reibmaterial (TA) und ein Halteelement (S) aufweist, wobei das Halteelement (S) eine erste Oberfläche (S1) in Kontakt mit dem Teil des Reibmaterials (TA), und auch eine zweite Oberfläche (S2) gegenüber der ersten Oberfläche (S1) aufweist.

20. Reibbacke (P) gemäß Anspruch 18, **dadurch gekennzeichnet, dass** jeder Knopf (T) einen Teil eines Reibmaterials (TA) und ein Halteelement (S) aufweist, wobei das Halteelement (S) eine erste Oberfläche (S1) aufweist in Kontakt mit dem Teil des Reibmaterials (TA) und auch eine zweite Oberfläche (S2) und eine dritte Oberfläche (S3) parallel zu und beabstandet von der zweiten Oberfläche (S2), um eine Erhebung (R) zu bilden, so dass, wenn ein Knopf (T) mit der Halteplatte (1) verbunden ist, die dritte Oberfläche (S3) in Berührungskontakt kommt mit der Halteplatte (1) und die zweite Oberfläche (S2) in einem vorbestimmten dritten Abstand (D3) von der Halteplatte (1) ist.

21. Reibbacke (P) gemäß dem vorangehenden Anspruch, **dadurch gekennzeichnet, dass** die Halteplatte (1) einen Abstandshalter aufweist für jede Gruppe von ersten Ösen, größenmäßig angepasst, um einen Bereich der Halteplatte (1) einzunehmen, der durch die ersten Ösen (5) jeder Gruppe von ersten Ösen definiert wird und eine vorgegebene Dicke aufweist.

22. Reibbacke (P) gemäß Anspruch 20 oder 21, **dadurch gekennzeichnet, dass** die dritte Oberfläche (S3) des Halteelements (S) eine im Wesentlichen dreieckige Form oder eine kreisförmige Form oder eine konvexe Polygonform hat.

23. Reibbacke (P) gemäß einem der Ansprüche 18-22, **dadurch gekennzeichnet, dass** jeder Knopf (T) einen Abschnitt eines unregelmäßigen Sechsecks hat, wobei das unregelmäßige Sechseck drei erste Seiten mit einer ersten Länge hat, die sich abwechseln mit drei zweiten Seiten mit einer zweiten Länge, wobei die zweite Länge kürzer ist als die erste Länge.

24. Reibbacke (P) gemäß einem der Ansprüche 18-22, **dadurch gekennzeichnet, dass** jeder Knopf (T) einen Abschnitt eines Dreiecks hat.

25. Reibbacke (P) gemäß einem der Ansprüche 18-24, **dadurch gekennzeichnet, dass** sie eine Basisplatte (2), ein Schwalbenschwanzelement (3) aufweist, wobei die Basisplatte (2) mit der Halteplatte (1) durch mindestens einen Abstandshalter (23) verbunden ist in der Weise, um in einem bestimmten Abstand (D0) von der Halteplatte (1) zu sein, und das Schwalbenschwanzelement (3) an der Basisplatte (2) fixiert ist.

## Revendications

1. Plaque de support (1) pour une pluralité de plots de matériau de friction (T) pour des freins à disques de véhicules ferroviaire sur roues, comprenant :
- au moins un premier trou traversant (F1) pour permettre le couplage de chaque plot (T) avec ladite plaque de support (1) ; chaque premier trou traversant (F1) définissant une zone et le groupe de zones de chaque premier trou traversant (F1) définissant un centre de gravité (BA) sur ladite plaque de support (1),
- une pluralité de deuxièmes trous traversant (F2) pour l'insertion d'un organe de blocage respectif (MB) de manière à coupler ladite plaque de support (1) avec une plaque de base (2) ; lesdits deuxièmes trous traversant (F2) étant ménagés à proximité du périmètre de ladite plaque de support (1),
**caractérisée en ce qu'**elle comprend en outre :
- au moins un groupe de premiers oeillets ou fentes (5) disposés autour dudit au moins premier trou traversant (F1), chaque groupe de premiers oeillets (5) comprenant au moins deux premiers oeillets (5),
avec lesdits premiers oeillets (5) alternant avec des premières portions (7) de la plaque de support, de sorte que, dans la phase de freinage d'un véhicule ferroviaire sur roues, en présence ou en l'absence d'une différence de température entre ladite plaque de support (1) et ledit la plaque de base (2), lesdites premières portions (7) sont déformées dans le domaine élastique, en raison de l'effet de forces normales appliquées sur lesdits plots (T), de telle sorte que les distributions de la pression de contact sur les plots (T) sont sensiblement uniformes entre elles.

2. Plaque de support selon la revendication précédente, **caractérisée en ce que** chaque groupe de premiers oeillets (5) est ménagé autour dudit au moins premier trou traversant (F1).

3. Plaque de support (1) selon l'une quelconque des revendications précédentes, **caractérisée en ce que** chaque groupe de premiers oeillets (5) est ménagé autour d'au moins deux premiers trous traversant (F1).

4. Plaque de support (1) selon l'une quelconque des revendications précédentes, **caractérisée en ce qu'**elle comporte un troisième trou traversant (F3, F3') pour l'insertion d'un organe de blocage supplémentaire (MBA, MBA'), de manière à coupler en outre ladite plaque de support (1) avec ladite plaque de base (2) ; ledit troisième trou traversant (F3, F3') étant ménagé au niveau ou à proximité dudit centre de gravité (BA).

5. Plaque de support (1) selon l'une quelconque des revendications précédentes, **caractérisée en ce qu'**elle comprend au moins un deuxième oeillet ou fente (6) ménagé à proximité d'au moins un deuxième trou traversant (F2), de préférence un deuxième oeillet (6) pour chaque deuxième trou traversant (F2).

6. Plaque de support (1) selon la revendication précédente, **caractérisée en ce que** chacun desdits deuxièmes oeillets (6) est incurvé et disposé sur ladite plaque de support (1) à une deuxième distance prédéterminée (D2) d'un deuxième trou traversant respectif (F2).

7. Plaque de support (1) selon l'une quelconque des revendications précédentes, **caractérisée en ce qu'**elle comprend au moins un organe anti-rotation (MA) pour empêcher la rotation d'un plot (T) et pour bloquer l'orientation dudit plot sur ladite plaque de support (1).

8. Plaque de support (1) selon l'une quelconque des revendications précédentes, **caractérisée en ce que** chaque groupe de premiers oeillets comprend trois premiers oeillets (5).

9. Plaque de support (1) selon la revendication précédente, **caractérisée en ce que** lesdits trois premiers oeillets (5) sont ménagés aux sommets d'un triangle ; chaque premier oeillet étant ménagé sur ladite plaque de support (1) à une première distance prédéterminée (D1) desdits premiers trous traversant (F1).

10. Plaque de support (1) selon l'une quelconque des revendications 1-9, **caractérisée en ce qu'**elle comprend douze premiers trous traversant (F1), avec six premiers trous traversant (F1) ménagés sur une première partie centrale de ladite plaque de support (1), trois premiers trous traversant (F1) ménagés sur une deuxième partie latérale de ladite plaque de support (1) et trois premiers trous traversant (F1) ménagés sur une troisième partie latérale de ladite plaque de support (1) ; ladite plaque de support (1) comportant douze groupes de premiers oeillets, un pour chaque premier trou traversant (F1), avec six premiers groupes de premiers oeillets ménagés sur ladite première partie centrale de ladite plaque de support (1), trois deuxièmes groupes de premiers oeillets ménagés sur ladite deuxième partie latérale de ladite plaque de support (1) et trois troisièmes groupes de premiers oeillets ménagés sur ladite troisième partie latérale de ladite plaque de support (1).

11. Plaque de support (1) selon la revendication 9 ou 10, **caractérisée en ce que** les centres desdits six premiers trous traversant (F1) prévus sur la première partie centrale de ladite plaque de support (1) sont ménagés aux sommets d'un hexagone irrégulier ; ledit hexagone irrégulier ayant ledit centre de gravité (BA) en tant que centre et étant formé de six côtés égaux, **en ce que** les centres desdits trois premiers trous traversant (F1) prévus sur la deuxième partie latérale de ladite plaque de support (1) sont agencés aux sommets d'un premier triangle, et **en ce que** les centres desdits trois premiers trous traversant (F1) prévus sur la troisième partie latérale de ladite plaque de support (1) sont disposés aux sommets d'un deuxième triangle ; le centre de chaque premier trou traversant (F1) coïncidant avec le centre de gravité d'un triangle respectif formé par lesdits trois premiers oeillets (5) de chaque groupe de premiers oeillets.

12. Plaque de support (1) selon l'une quelconque des revendications 1-9, **caractérisée en ce qu'**elle comprend neuf premiers trous traversant (F1), avec trois premiers trous traversant (F1) ménagés sur une première partie centrale de ladite plaque de support (1), trois premiers trous traversant (F1) ménagés sur une deuxième partie latérale de ladite plaque de support (1) et trois premiers trous traversant (F1) ménagés sur une troisième partie latérale de ladite plaque de support (1) ; ladite plaque de support (1) comportant neuf groupes de premiers oeillets, un pour chaque premier trou traversant (F1), avec trois premiers groupes de premiers oeillets ménagés sur ladite première partie centrale de ladite plaque de support (1), trois deuxièmes groupes de premiers oeillets ménagés sur ladite deuxième partie latérale de ladite plaque de support (1) et trois troisièmes groupes de premiers oeillets ménagés sur ladite troisième partie latérale de ladite plaque de support (1).

13. Plaque de support (1) selon les revendications 9 et 12, **caractérisée en ce que** les centres desdits trois premiers trous traversant (F1) prévus sur la première partie centrale de ladite plaque de support (1) sont ménagés aux sommets d'un premier triangle, **en ce que** les centres desdits trois premiers trous traversant (F1) prévus sur la deuxième partie latérale de ladite plaque de support (1) sont disposés aux sommets d'un deuxième triangle et **en ce que** les centres desdits trois premiers trous traversant (F1) prévus sur la troisième partie latérale de ladite plaque de support (1) sont ménagés aux sommets d'un troisième triangle.

14. Plaque de support (1) selon l'une quelconque des revendications 1-9, **caractérisée en ce qu'**elle comprend six premiers trous traversant (F1) ; ladite plaque de support (1) comprenant six groupes de premiers oeillets, un pour chaque premier trou traversant (F1), avec les centres de trois premiers trous traversant (F1) ménagés aux sommets d'un premier triangle et les centres de trois premiers trous traversant (F1) ménagés aux sommets d'un deuxième triangle.

15. Plaque de support (1) selon l'une quelconque des revendications 1-8, **caractérisée en ce que** les premiers oeillets (5) de chaque groupe de premiers oeillets sont ménagés le long d'une circonférence.

16. Plaque de support (1) selon la revendication précédente, **caractérisée en ce que** chaque groupe de premiers oeillets (5) est ménagé autour de trois premiers trous traversant (F1), avec les centres desdits trois premiers trous traversant (F1) ménagés aux sommets d'un triangle inscrit dans une circonférence concentrique par rapport à la circonférence le long de laquelle lesdits premiers oeillets (5) sont ménagés.

17. Plaque de support (1) selon l'une quelconque des revendications précédentes, **caractérisée en ce que** ladite plaque de support (1) est réalisée en acier, de préférence AISI 422.

18. Patin de friction (P) comprenant une plaque de support (1) selon l'une quelconque des revendications précédentes, et une pluralité de plots de matière de friction (T), avec chaque plot (T) comprenant au moins des premiers moyens de couplage (C, C1, C2, C3) destinés à être couplés à au moins un premier trou traversant (F1) de ladite plaque de support (1) ; chaque plot étant couplé sur ladite plaque de support (1) à un groupe respectif de premiers oeillets (5).

19. Patin de friction (1) selon la revendication 18, **caractérisé en ce que** ladite plaque de support (1) comprend un organe d'espacement pour chaque groupe de premiers oeillets, dimensionné pour occuper une zone de ladite plaque de support (1) définie par les premiers oeillets (5) de chaque groupe de premiers oeillets et ayant une épaisseur prédéterminée, et **en ce que** chaque plot (T) comprend une portion de matériau de friction (TA) et un organe de support (S), avec ledit organe (S) de support comprenant une première surface (S1) en contact avec ladite portion de matériau de friction (TA), et également une deuxième surface (S2), opposée à ladite première surface (S1).

20. Patin de friction (P) selon la revendication 18, **caractérisé en ce que** chaque plot (T) comprend une portion de matériau de friction (TA) et un organe de support (S), avec ledit organe de support (S) comprenant une première surface (S1) en contact avec ladite portion de matériau de friction (TA) et également une deuxième surface (S2) et une troisième surface (S3), parallèle à et espacée de ladite deuxième surface (S2) de manière à former un rehaussement (R), de sorte que, lorsqu'un plot (T) est couplé avec ladite plaque de support (1), ladite troisième surface (S3) entre en contact avec ladite plaque de support (1) et ladite deuxième surface (S2) se trouve à une troisième distance prédéterminée (D3) de ladite plaque de support (1).

21. Patin de friction (P) selon la revendication précédente, **caractérisé en ce que** ladite plaque de support (1) comprend un organe d'espacement pour chaque groupe de premiers oeillets, dimensionné pour occuper une zone de ladite plaque de support (1) définie par les premiers oeillets (5) de chaque groupe de premiers oeillets et ayant une épaisseur prédéterminée.

22. Patin de friction (P) selon la revendication 20 ou 21, **caractérisé en ce que** ladite troisième surface (S3) dudit organe de support (S) présente une forme sensiblement triangulaire ou une forme sensiblement circulaire ou une forme sensiblement polygonale convexe.

23. Patin de friction (P) selon l'une quelconque des revendications 18-22, **caractérisé en ce que** chaque plot (T) présente une section en hexagone irrégulier, ledit hexagone irrégulier ayant trois premiers côtés, ayant une première longueur, en alternance avec trois seconds côtés, ayant une seconde longueur, avec ladite seconde longueur plus courte que ladite première longueur.

24. Patin de friction (P) selon l'une quelconque des revendications 18-22, **caractérisé en ce que** chaque plot (T) présente une section d'un triangle.

25. Patin de friction (P) selon l'une quelconque des revendications 18-24, **caractérisé en ce qu'**il comprend une plaque de base (2), un organe en queue d'aronde (3) ; ladite plaque de base (2) étant couplée à ladite plaque de support (1) au moyen d'au moins un organe d'espacement (23) de manière à se trouver à une distance prédéterminée (D0) de ladite plaque de support (1), et ledit organe en queue d'aronde (3) étant fixé à ladite plaque de base (2).
